# EUROPEAN PATENT APPLICATION

(11) **EP 1 841 217 A1**
(43) Date of publication of application: **03.10.2007**
(21) Application number: 06006404.5
(22) Date of filing: 28.03.2006
(51) Int. Cl.: H04N 5/44

(54) **Digital broadcasting signal receiver with a plurality of receiving modules**

(71) Applicant: Lite-On Technology Corporation, Neihu, Taipei (TW)
(72) Inventor: Chang, Ju-Ting, Taipei City (TW)
(74) Representative: Schaeberle, Steffen

(57) **Abstract**

A digital broadcasting signal receiver (100) includes: an antenna module (1 20) for receiving a digital broadcasting signal; a plurality of receiving modules (210, 220) coupled to the antenna module (120) for processing a plurality of channels of the digital broadcasting signal from the antenna module (120) in parallel; and a transmission interface (240) coupled to the plurality of receiving modules (210, 220) for transmitting signals from the plurality of receiving modules (21 0, 220) to a corresponding host device (12, 20).

## Description

The present invention relates to a digital broadcasting signal receiver according to the pre-characterizing clause of claim 1.

In conventional analog signal broadcasting systems, reception quality is usually deteriorated by landforms and other environmental factors. On the contrary, digital broadcasting systems can provide signals with better image or audio quality due to their robust communications performance. In contrast with conventional analog broadcasting systems, digital broadcasting systems have superior efficiency in the utilization of the frequency spectrum and therefore allow more programs to be transmitted within the same bandwidth.

In the prior art, a digital video broadcasting (DVB) receiver is often implemented in the form of a set-top box. It is inconvenient to utilize the set-top box, especially for the users of laptop computers, because the set-top box has a large volume and requires an independent electric power source. Moreover, the conventional DVB receiver can only process a single signal channel at the same time. Therefore, it cannot allow a user to watch video programs of different channels at the same time, or record a program while watching another program.

This in mind, the present invention aims at providing a digital broadcasting signal receiver that processes a plurality of channels of a received digital broadcasting signal in parallel.

This is achieved by a digital broadcasting signal receiver according to claim 1. The dependent claims pertain to corresponding further development and improvements.

As will be seen more clearly from the detailed description following below, the claimed digital broadcasting signal receiver includes a plurality of receiving modules that are coupled to a transmission interface.

In the following, the invention is further illustrated by way of example, taking reference to the accompanying drawings. Thereof
- Fig. 1: is a schematic diagram of a digital broadcasting signal receiver according to one embodiment of the present invention; and
- Fig. 2: is a simplified block diagram of the digital broadcasting signal receiver of Fig. 1 according to an exemplary embodiment of the present invention.

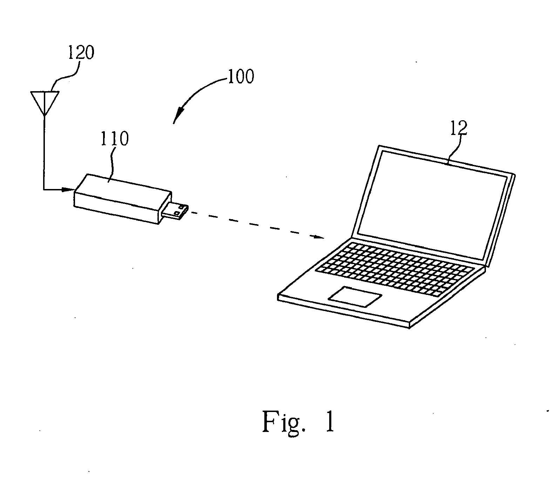

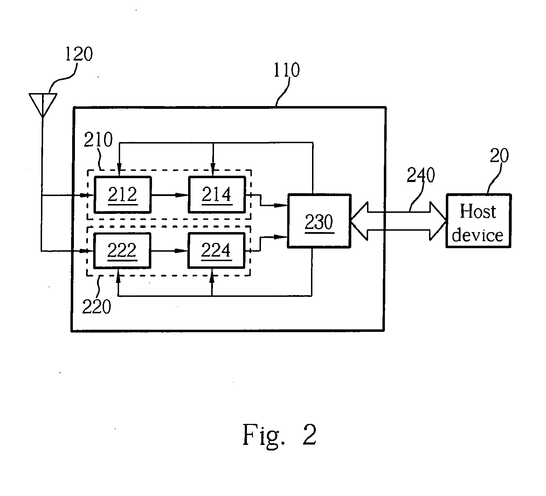

Please refer to Fig. 1, which shows a schematic diagram of a digital broadcasting signal receiver 100 according to one embodiment of the present invention. In this embodiment, the digital broadcasting signal receiver 100 is implemented in the form of a USB dongle, i.e. the digital broadcasting signal receiver 100 is able to couple to a host device 1 2, such as a laptop computer shown in Fig. 1, through a USB interface. As shown, the digital broadcasting signal receiver 100 comprises a housing 110 for covering and protecting inside components; and an antenna module 120 connected to the housing 110 for receiving a digital broadcasting signal. In practice, the antenna module 120 may include one or more wideband antennas, omni-directional antennas, directional antennas, or smart antennas. Preferably, the antenna module 120 is integrated inside the housing 110 to reduce the overall volume of the digital broadcasting signal receiver 100. For simplicity of explanation, in the following description the antenna module 120 is herein assumed to receive digital broadcasting signals complying with the Digital Video Broadcasting-Terrestrial (DVB-T) standard or the Digital Video Broadcasting-Handheld (DVB-H) standard. Hereinafter, implementations and operations of the digital broadcasting signal receiver 100 will be explained with reference to Fig. 2.

Fig. 2 shows a simplified block diagram of the digital broadcasting signal receiver 100 according to an exemplary embodiment of the present invention. As shown in Fig. 2, the digital broadcasting signal receiver 100 comprises a first receiving module 210, a second receiving module 220, a control unit 230, and a transmission interface 240. The first receiving module 210 comprises a first tuner 212 coupled to the antenna module 1 20 for down-converting the frequency of the digital broadcasting signal received by the antenna module 120; and a first demodulator 21 4 coupled to the first tuner 212 for demodulating signals transmitted from the first tuner 212 to generate a first video signal. Similarly, the second receiving module 220 comprises a second tuner 222 coupled to the antenna module 1 20 for down-converting the frequency of the digital broadcasting signal received by the antenna module 120; and a second demodulator 224 coupled to the second tuner 222 for demodulating signals transmitted from the second tuner 222 to generate a second video signal. In practice, the first tuner 212 and the second tuner 222 can be implemented with various architectures that are known in the art, such as the direct-conversion architecture or the superheterodyne architecture.

In the digital broadcasting signal receiver 100, the control unit 230 is arranged for controlling operations of the first and second receiving modules 210 and 220. For example, the control unit 230 may adjust the operating parameters of the tuners 212, 222 and the demodulators 214, 224, such as the signal frequency, bandwidth, guard interval, and so forth, according to commands from the host device 20 through the transmission interface 240. The transmission interface 240 is utilized for transmitting the first and second video signals generated from the first and second receiving modules 210 and 220 to the host device 20, such as a laptop computer, a desktop computer, a portable video player, etc. In this embodiment, the control unit 230 is a USB controller and the transmission interface 240 is a USB interface. Note that this is merely an example rather than a restriction of the practical implementations. For example, according to design requirements, the transmission interface 240 may be an IEEE 1394 interface, a PCMCIA interface, a PCI interface, a mini PCI interface, a PCI-E interface, a blue tooth transmission interface, an IEEE 802.11 series interface, or other feasible data transmission interfaces. In practice, the implementations of the control unit 230 may vary with the type of the transmission interface 240 adopted by the digital broadcasting signal receiver 100. For example, if the transmission interface 240 is replaced with a wireless transmission interface, the control unit 230 needs to be replaced with a control circuit corresponding to the wireless transmission interface instead of the above-mentioned USB controller.

In this embodiment, the digital broadcasting signal receiver 100 has two receiving modules 210 and 220 so it is capable of simultaneously processing two different channels of the received digital broadcasting signal in parallel. Accordingly, the host device 20 can simultaneously receive signals of two different channels from the digital broadcasting signal receiver 100 through the transmission interface 240, so that the user can watch video programs of two different channels at the same time or record the program of one channel while watching the program of the other channel. It can be appreciated by those of ordinary skill in the art that the number of receiving modules arranged in the digital broadcasting signal receiver 100 is not limited to two as shown in the previous embodiment. In practice, the digital broadcasting signal receiver 100 may be provided with more than two receiving modules to simultaneously process more channels of the received signal.

In addition, since the digital broadcasting signal receiver 100 is implemented in the form of a USB dongle, the required electric power may be received from the host device 20 through the transmission interface 240. Accordingly, no additional power line is required.

In the foregoing embodiments, the reception of the digital video broadcasting signal is described. This is merely for simplicity of explanation rather than a limitation of the practical applications. The disclosed architectures can also be applied in the reception of other digital broadcasting signals. For example, the disclosed architecture of the digital broadcasting signal receiver 100 is also feasible for use in the reception of the Digital Audio Broadcasting (DAB) signal. Those of ordinary skill in the art can easily realize such an application according to the disclosure of the present invention, and further details are therefore omitted for brevity.

The invention can be summarized as a digital broadcasting signal receiver includes: an antenna module for receiving a digital broadcasting signal; a plurality of receiving modules coupled to the antenna module for processing a plurality of channels of the digital broadcasting signal from the antenna module in parallel; and a transmission interface coupled to the plurality of receiving modules for transmitting signals from the plurality of receiving modules to a corresponding host device.

For completeness, various aspects of the invention are set out in the following numbered clauses:
1. A digital broadcasting signal receiver comprising:
   an antenna module for receiving a digital broadcasting signal;
   a plurality of receiving modules coupled to the antenna module for processing a plurality of channels of the digital broadcasting signal from the antenna module in parallel; and
   a transmission interface coupled to the plurality of receiving modules for transmitting signals from the plurality of receiving modules to a corresponding host device.
2. The digital broadcasting signal receiver of clause 1, wherein the transmission interface is a USB interface, an IEEE 1394 interface, a PCMCIA interface, a PCI interface, a mini PCI interface, a PCI-E interface, a blue tooth transmission interface, or an IEEE 802.11 series interface.
3. The digital broadcasting signal receiver of clause 1 , wherein the digital broadcasting signal complies with the Digital Video Broadcasting-Terrestrial (DVB-T) standard or the Digital Video Broadcasting-Handheld (DVB-H) standard.
4. The digital broadcasting signal receiver of clause 1 , wherein the digital broadcasting signal complies with the Digital Audio Broadcasting (DAB) standard.
5. The digital broadcasting signal receiver of clause 1, wherein each of the plurality of receiving modules comprises:
   a tuner coupled to the antenna module for down-converting the frequency of the digital broadcasting signal from the antenna module; and
   a demodulator coupled to the tuner for demodulating signals from the tuner.
6. The digital broadcasting signal receiver of clause 5, further comprising:
   a control unit coupled to the tuner and the demodulator for controlling operations of the tuner and the demodulator according to commands from the host device.
7. The digital broadcasting signal receiver of clause 1, further comprising:
   a control unit coupled to the plurality of receiving modules for controlling operations of each receiving module.
8. The digital broadcasting signal receiver of clause 1, wherein the digital broadcasting signal receiver receives required electric power from the host device through the transmission interface.
9. A digital video broadcasting (DVB) receiver comprising:
   an antenna module for receiving a digital video broadcasting signal;
   a plurality of receiving modules coupled to the antenna module for processing a plurality of channels of the digital video broadcasting signal from the antenna module in parallel; and
   a USB interface coupled to the plurality of receiving modules for transmitting signals from the plurality of receiving modules to a corresponding host device.
10. The DVB receiver of clause 9, further comprising:
   a USB controller coupled to the plurality of receiving modules for controlling operations of the plurality of receiving modules according to commands from the host device.
11. The DVB receiver of clause 9, wherein the digital video broadcasting signal complies with the Digital Video Broadcasting-Terrestrial (DVB-T) standard or the Digital Video Broadcasting-Handheld (DVB-H) standard.
12. The DVB receiver of clause 9, wherein the DVB receiver receives required electric power from the host device through the USB interface.

All combinations and sub-combinations of the above-described features also belong to the invention.

## Claims

1. A digital broadcasting signal receiver (100) comprising:
an antenna module (120) for receiving a digital broadcasting signal;
**characterized by**:
a plurality of receiving modules (210, 220) coupled to the antenna module (120) for processing a plurality of channels of the digital broadcasting signal from the antenna module (120) in parallel; and
a transmission interface (240) coupled to the plurality of receiving modules (210, 220) for transmitting signals from the plurality of receiving modules (21 0, 220) to a corresponding host device (12, 20).

2. The digital broadcasting signal receiver (100) of claim 1, **characterized in that** the transmission interface (240) is a USB interface, an IEEE 1394 interface, a PCMCIA interface, a PCI interface, a mini PCI interface, a PCI-E interface, a blue tooth transmission interface, or an IEEE 802.1 1 series interface.

3. The digital broadcasting signal receiver (100) of claim 1, **characterized in that** the digital broadcasting signal complies with the Digital Video Broadcasting-Terrestrial (DVB-T) standard or the Digital Video Broadcasting-Handheld (DVB-H) standard.

4. The digital broadcasting signal receiver (100) of claim 1, **characterized in that** the digital broadcasting signal complies with the Digital Audio Broadcasting (DAB) standard.

5. The digital broadcasting signal receiver (100) of claim 1, **characterized in that** each of the plurality of receiving modules (210, 220) comprises:
a tuner (212, 222) coupled to the antenna module (120) for down-converting the frequency of the digital broadcasting signal from the antenna module (120); and
a demodulator (214, 224) coupled to the tuner (21 2, 222) for demodulating signals from the tuner (212, 222).

6. The digital broadcasting signal receiver (100) of claim 5, **characterized by**:
a control unit (230) coupled to the tuner (21 2, 222) and the demodulator (214, 224) for controlling operations of the tuner (212, 222) and the demodulator (214, 224) according to commands from the host device (12, 20).

7. The digital broadcasting signal receiver (100) of claim 1, **characterized by**:
a control unit (230) coupled to the plurality of receiving modules (210, 220) for controlling operations of each receiving module (210, 220).

8. The digital broadcasting signal receiver (100) of claim 1, **characterized in that** the digital broadcasting signal receiver (100) receives required electric power from the host device (1 2, 20) through the transmission interface (240).

## Amended claims

### Amended claims in accordance with Rule 86(2) EPC.

**1.** A digital broadcasting signal receiver (100) comprising:
an antenna module (120) for receiving a digital broadcasting signal;
a first receiving module (210) coupled to the antenna module (120) for processing a channel of the digital broadcasting signal from the antenna module (120) at a time; and
a USB interface (240) coupled to the first receiving module (210) for transmitting signals from the first receiving module (210) to a corresponding host device (12, 20), wherein the digital broadcasting signal receiver (100) receives required electric power from the host device (12, 20) through the transmission interface (240),
**characterized by**
at lest one second receiving module (220) coupled to the antenna module (120) for processing a channel of the digital broadcasting signal from the antenna module (120) at a time, respectively, and
also coupled to the USB interface (240), respectively, for transmitting signals from the at least one second receiving module (220) to the corresponding host device (12, 20).

**2.** The digital broadcasting signal receiver (100) of claim 1, **characterized in that** the digital broadcasting signal complies with the Digital Video Broadcasting-Terrestrial (DVB-T) standard or the Digital Video Broadcasting-Handheld (DVB-H) standard.

**3.** The digital broadcasting signal receiver (100) of claim 1, **characterized in that** the digital broadcasting signal complies with the Digital Audio Broadcasting (DAB) standard.

**4.** The digital broadcasting signal receiver (100) of claim 1, **characterized in that** each of the plurality of receiving modules (210, 220) comprises:
a tuner (212, 222) coupled to the antenna module (120) for down-converting the frequency of the digital broadcasting signal from the antenna module (120); and
a demodulator (214, 224) coupled to the tuner (212, 222) for demodulating signals from the tuner (212, 222).

**5.** The digital broadcasting signal receiver (100) of claim 4, **characterized by**:
a control unit (230) coupled to the tuner (212, 222) and the demodulator (214, 224) for controlling operations of the tuner (212, 222) and the demodulator (214, 224) according to commands from the host device (12, 20).

**6.** The digital broadcasting signal receiver (100) of claim 1, **characterized by**:
a control unit (230) coupled to the plurality of receiving modules (210, 220) for controlling operations of each receiving module (210, 220).
